# EUROPEAN PATENT APPLICATION

(11) **EP 4 132 016 A1**
(43) Date of publication of application: **08.02.2023**
(21) Application number: 21782102.4
(22) Date of filing: 04.02.2021
(51) Int. Cl.: H04W 4/02

(54) **METHOD AND APPARATUS FOR USING PROXIMITY DISCOVERY IDENTIFICATION, AND STORAGE MEDIUM**

(30) Priority: 03.04.2020 CN 202010258452
(71) Applicant: Datang Mobile Communications Equipment Co., Ltd., Beijing 100085 (CN)
(72) Inventor: DENG, Qiang, Beijing 100085 (CN)
(74) Representative: Nony
(86) International application number: PCT/CN2021/075346
(87) International publication number: WO 2021/196886

(57) **Abstract**

A method and apparatus for using a proximity discovery identification, and a storage medium, for solving the technical problem in the prior art of how to assign the proximity discovery identification for a UE and how to use the proximity discovery identification under a 5G network architecture. The use method comprises: receiving a proximity service policy provision request message from a user terminal UE, wherein the proximity service policy provision request message is used for requesting to provide, for the UE, parameters required for performing proximity discovery; and providing a proximity discovery parameter to the LTE according to the proximity service policy provision request message, wherein the proximity discovery parameter comprises the proximity discovery identification of the UE.

## Description

### Cross-Reference of Related Applications

The present application claims the priority of Chinese Patent Application No. 202010258452.5, filed with the China National Intellectual Property Administration on April 03, 2020 and entitled "Method and Apparatus for Using PDUID, and Storage Medium", the entire content of which is hereby incorporated by reference.

### Field

The present application relates to the field of communications, and in particular, to a method and apparatus for using a proximity service discovery UE identifier and a storage medium.

### Background

In the Proximity Service (ProSe) standard of the fourth generation mobile network (4G), in order to support the restricted discovery process, the ProSe Function provides a User Equipment (UE) with a ProSe Discovery UE ID (PDUID), and the UE provides the PDUID to a ProSe Application Server. In the subsequent discovery process, the ProSe application server uses the PDUID to authenticate a discovery request sent by the ProSe function.

In the ProSe standard of the fifth generation mobile network (5G), the network entity that provides policies/parameters to the UE is no longer the ProSe Function but a Policy Control Function (PCF). The PCF provides the UE with discovery parameters, and the ProSe Function participates in the discovery process. That is, the parameter providing function and the discovery function are located in different network entities in the 5G ProSe, while the parameter providing function and the discovery function are located in the same network entity (i.e., ProSe Function) in the 4G ProSe, making it impossible to use the same method as that in the 4G ProSe for parameter provision and function discovery in the 5G ProSe.

How to assign a PDUID to a UE and use the PDUID has not yet been resolved under the existing 5G network architecture.

In view of this, how to assign a PDUID to a UE and how to use the PDUID under the 5G network architecture have become an urgent technical problem to be solved.

### Brief Summary

The present application provides a method and apparatus for using a PDUID and a storage medium, so as to solve the technical problem in the prior art of how to assign a PDUID to a UE and how to use the PDUID under the 5G network architecture.

In a first aspect, in order to solve the above technical problem, a method for using a PDUID according to an embodiment of the present application is performed by a PCF on the network side, and the technical solution of the method is as follows:
receiving a proximity service policy provision request message from a UE; wherein the proximity service policy provision request message is used for requesting to provide the UE with a parameter required for proximity service discovery;
providing a proximity discovery parameter to the UE according to the proximity service policy provision request message; wherein the proximity discovery parameter includes a PDUID of the UE.

Optionally, receiving the proximity service policy provision request message from the UE, further includes:
receiving proximity discovery capability information from the UE; wherein the proximity discovery capability information is used to indicate that the UE supports the proximity service discovery.

Optionally, providing the proximity discovery parameter to the UE, includes:
assigning the PDUID for the UE, and providing the PDUID to the UE;
or, obtaining the PDUID from a proximity service function, and providing the PDUID to the UE.

Optionally, obtaining the PDUID from the proximity service function, includes:
requesting, through a request message, the proximity service function to assign the PDUID, wherein the request message includes a UE identifier of the UE;
receiving the PDUID assigned by the proximity service function to the UE.

Optionally, after providing the proximity discovery parameter to the UE, the method further includes:
receiving an authentication request message from the proximity service function, wherein the authentication request message contains a UE identifier of the UE;
returning an authentication response message to the proximity service function, wherein the response message contains the PDUID of the UE.

Optionally, the PDUID includes a Public Land Mobile Network Identifier (PLMN ID) and a temporary identifier of the UE.

In a second aspect, a method for using a PDUID according to an embodiment of the present application is performed by a proximity service function on the network side, and the technical solution of the method is as follows:
receiving a discovery request message sent by a UE, wherein the discovery request message contains a UE identifier of the UE and a ProSe Restricted Code of the UE, wherein the ProSe Restricted Code is assigned by an application server according to a PDUID provided by a PCF for the UE;
obtaining the PDUID of the UE;
sending a discovery response message to the UE, wherein the discovery response message contains a proximity discovery identification code corresponding to the ProSe Restricted Code.

Optionally, obtaining the PDUID of the UE, includes:
if the PDUID is assigned by the proximity service function to the UE, obtaining the PDUID in the proximity service function according to the UE identifier;
if the PDUID is assigned by the PCF to the UE:
   obtaining the PDUID from the discovery request message when the discovery request message includes the PDUID; or
   obtaining the PDUID from the PCF according to the UE identifier when the discovery request message does not include the PDUID.

Optionally, obtaining the PDUID from the PCF according to the UE identifier, includes:
sending an authentication request message to the PCF, wherein the authentication request message contains the UE identifier;
receiving an authentication response message returned by the PCF, wherein the response message contains the PDUID.

In a third aspect, a method for using a PDUID according to an embodiment of the present application is performed by a UE, and the technical solution of the method is as follows:
sending a discovery request message containing a UE identifier of the UE and a ProSe Restricted Code to a proximity service function; wherein the ProSe Restricted Code is assigned by an application server according to a PDUID provided by a PCF for the UE;
receiving a discovery response message returned by the proximity service function; wherein the discovery response message contains a proximity discovery identification code corresponding to the ProSe Restricted Code;
broadcasting the proximity discovery identification code over an air interface.

Optionally, before sending the discovery request message containing the UE identifier of the UE and the ProSe Restricted Code to the proximity service function, the method further includes:
providing the PDUID to the application server;
receiving the ProSe Restricted Code assigned by the application server to the UE.

Optionally, before providing the PDUID to the application server, the method further includes:
sending a proximity service policy provision request message to the PCF; wherein the proximity service policy provision request message is used for requesting to provide the UE with a parameter required for proximity service discovery;
receiving a proximity discovery parameter provided by the PCF for the UE; wherein the proximity discovery parameter includes the PDUID.

Optionally, the PDUID includes a Public Land Mobile Network Identifier (PLMN ID) and a temporary identifier of the UE.

Optionally, the discovery request message further includes the PDUID.

In a fourth aspect, embodiments of the present application provide an apparatus for using a PDUID, which is applied to a PCF on the network side, and the apparatus includes:
a receiving unit, configured to receive a proximity service policy provision request message from a LTE; wherein the proximity service policy provision request message is used for requesting to provide the UE with a parameter required for proximity service discovery;
a providing unit, configured to provide a proximity discovery parameter to the UE according to the proximity service policy provision request message; wherein the proximity discovery parameter includes a PDUID of the UE.

Optionally, the receiving unit is further configured to:
receive proximity discovery capability information from the LTE; wherein the proximity discovery capability information is used to indicate that the UE supports the proximity service discovery.

Optionally, the providing unit is specifically configured to:
assign the PDUID for the UE, and provide the PDUID to the UE;
or, obtain the PDUID from a proximity service function, and provide the PDUID to the UE.

Optionally, the providing unit is further configured to:
request, through a request message, the proximity service function to assign the PDUID, wherein the request message contains a UE identifier of the UE;
receive the PDUID assigned by the proximity service function to the UE.

Optionally, the providing unit is further configured to:
receive an authentication request message of the proximity service function, wherein the authentication request message contains a UE identifier of the UE;
return an authentication response message to the proximity service function, wherein the response message contains the PDUID of the UE.

Optionally, the PDUID includes a Public Land Mobile Network Identifier (PLMN ID) and a temporary identifier of the UE.

In a fifth aspect, embodiments of the present application provide an apparatus for using a PDUID, which is applied to a proximity service function on the network side, and the apparatus includes:
a receiving unit, configured to receive a discovery request message sent by a UE, wherein the discovery request message contains a UE identifier of the UE and a ProSe Restricted Code that is assigned by an application server according to a PDUID provided by a PCF for the UE;
an obtaining unit, configured to obtain the PDUID of the UE;
a sending unit, configured to send a discovery response message to the UE, wherein the discovery response message contains a proximity discovery identification code corresponding to the ProSe Restricted Code.

Optionally, the obtaining unit is configured to:
obtain the PDUID in the proximity service function according to the UE identifier, if the PDUID is assigned by the proximity service function to the UE;
obtain the PDUID from the discovery request message when the discovery request message includes the PDUID; or obtain the PDUID from the PCF according to the UE identifier when the discovery request message does not include the PDUID, if the PDUID is assigned by the PCF to the UE.

Optionally, the obtaining unit is further configured to:
send an authentication request message to the PCF, wherein the authentication request message contains the UE identifier;
receive an authentication response message returned by the PCF, wherein the response message contains the PDUID.

In a sixth aspect, embodiments of the present application provide an apparatus for using a PDUID, which is applied to a UE, and the apparatus includes:
a sending unit, configured to send a discovery request message containing a UE identifier of the UE and a ProSe Restricted Code to a proximity service function; wherein the ProSe Restricted Code is assigned by an application server according to a PDUID provided by a PCF for the UE;
a receiving unit, configured to receive a discovery response message returned by the proximity service function; wherein the discovery response message contains a proximity discovery identification code corresponding to the ProSe Restricted Code;
a broadcasting unit, configured to broadcast the proximity discovery identification code over an air interface.

Optionally, the sending unit is further configured to:
provide the PDUID to the application server;
receive the ProSe Restricted Code assigned by the application server to the UE.

Optionally, the sending unit is further configured to:
send a proximity service policy provision request message to the PCF; wherein the proximity service policy provision request message is used for requesting to provide the UE with a parameter required for proximity service discovery;
receive a proximity discovery parameter provided by the PCF for the UE; wherein the proximity discovery parameter includes the PDUID.

Optionally, the PDUID includes a Public Land Mobile Network Identifier (PLMN ID) and a temporary identifier of the UE.

Optionally, the discovery request message further includes the PDUID.

In a seventh aspect, embodiments of the present application further provide an apparatus for using a PDUID, which is applied to a PCF on the network side, and the apparatus includes: a processor, a memory and a transceiver;
wherein the processor is configured to read a program in the memory and perform a process of:
receiving a proximity service policy provision request message from a UE; wherein the proximity service policy provision request message is used for requesting to provide the UE with a parameter required for proximity service discovery;
providing a proximity discovery parameter to the UE according to the proximity service policy provision request message; wherein the proximity discovery parameter includes a PDUID of the UE.

Optionally, the processor is further configured to:
receive proximity discovery capability information from the LTE; wherein the proximity discovery capability information is used to indicate that the UE supports proximity service discovery.

Optionally, the processor is configured to:
assign the PDUID for the UE, and provide the PDUID to the UE;
or, obtain the PDUID from a proximity service function, and provide the PDUID to the UE.

Optionally, the processor is further configured to:
request, through a request message, the proximity service function to assign the PDUID, wherein the request message contains a UE identifier of the UE;
receive the PDUID assigned by the proximity service function to the UE.

Optionally, the processor is further configured to:
receive an authentication request message of the proximity service function, wherein the authentication request message contains a UE identifier of the UE;
return an authentication response message to the proximity service function, wherein the response message contains the PDUID of the UE.

Optionally, the PDUID includes a Public Land Mobile Network Identifier (PLMN ID) and a temporary identifier of the UE.

In an eighth aspect, embodiments of the present application further provide an apparatus for using a PDUID, which is applied to a proximity service function on the network side, and the apparatus includes: a processor, a memory and a transceiver;
wherein the processor is configured to read a program in the memory and perform a process of:
receiving a discovery request message sent by a UE, wherein the discovery request message contains a UE identifier of the UE and a ProSe Restricted Code that is assigned by an application server according to a PDUID provided by a PCF for the UE;
obtaining the PDUID of the LTE;
sending a discovery response message to the UE, wherein the discovery response message contains a proximity discovery identification code corresponding to the ProSe Restricted Code.

Optionally, the processor is configured to:
obtain the PDUID in the proximity service function according to the UE identifier, if the PDUID is assigned by the proximity service function to the UE;
obtain the PDUID from the discovery request message when the discovery request message includes the PDUID; or obtain the PDUID from the PCF according to the UE identifier when the discovery request message does not include the PDUID, if the PDUID is assigned by the PCF to the UE.

Optionally, the processor is further configured to:
send an authentication request message to the PCF, wherein the authentication request message contains the UE identifier;
receive an authentication response message returned by the PCF, wherein the response message contains the PDUID.

In a ninth aspect, embodiments of the present application further provide an apparatus for using a PDUID, which is applied to a UE on the network side, and the apparatus includes: a processor, a memory and a transceiver;
wherein the processor is configured to read a program in the memory and perform a process of:
sending a discovery request message containing a UE identifier of the UE and a ProSe Restricted Code to a proximity service function; wherein the ProSe Restricted Code is assigned by an application server according to a PDUID provided by a PCF for the UE;
receiving a discovery response message returned by the proximity service function; wherein the discovery response message contains a proximity discovery identification code corresponding to the ProSe Restricted Code;
broadcasting the proximity discovery identification code over an air interface.

Optionally, the processor is further configured to:
provide the PDUID to the application server;
receive the ProSe Restricted Code assigned by the application server to the UE.

Optionally, the processor is further configured to:
send a proximity service policy provision request message to the PCF; wherein the proximity service policy provision request message is used for requesting to provide the UE with a parameter required for proximity service discovery;
receive a proximity discovery parameter provided by the PCF for the UE; wherein the proximity discovery parameter includes the PDUID.

Optionally, the PDUID includes a Public Land Mobile Network Identifier (PLMN ID) and a temporary identifier of the UE.

Optionally, the discovery request message further includes the PDUID.

In a tenth aspect, embodiments of the present application further provide a readable storage medium, including:
a memory configured to store instructions that, when executed by a processor, cause an apparatus including the readable storage medium to complete the method as described in the first aspect or the second aspect or the third aspect described above.

Through the technical solutions in one or more of the above embodiments of the present application, the embodiments of the present application have at least the following technical effects.

In the embodiments of the present application, after receiving the proximity service policy provision request message sent by the UE, the PCF on the network side provides the UE with the parameter required for proximity service discovery according to the proximity service policy provision request message, and provides the UE with the proximity discovery parameter that includes the PDUID of the UE, so that the UE can use the PDUID under the 5G network architecture.

### Brief Description of the Drawings

FIG. 1 is a flowchart of the restricted discovery process of the proximity service in the 4G;
FIG. 2 is a flowchart of a method for using a PDUID on the PCF side according to an embodiment of the present application;
FIG. 3 is a flowchart in which the PCF assigns a PDUID to a UE according to an embodiment of the present application;
FIG. 4 is a flowchart in which the proximity service function assigns a PDUID according to an embodiment of the present application;
FIG. 5 is a flowchart of a method for using a PDUID on the proximity service function side according to an embodiment of the present application;
FIG. 6 is a first flowchart of a proximity service discovery process according to an embodiment of the present application;
FIG. 7 is a second flowchart of a proximity service discovery process according to an embodiment of the present application;
FIG. 8 is a third flowchart of a proximity service discovery process according to an embodiment of the present application;
FIG. 9 is a flowchart of a method for using a PDUID on the UE side according to an embodiment of the present application;
FIG. 10 is a first structural schematic diagram of an apparatus for using a PDUID on the PCF side according to an embodiment of the present application;
FIG. 11 is a first structural schematic diagram of an apparatus for using a PDUID on the proximity service function side according to an embodiment of the present application;
FIG. 12 is a first structural schematic diagram of an apparatus for using a PDUID on the LTE side according to an embodiment of the present application;
FIG. 13 is a second structural schematic diagram of an apparatus for using a PDUID on the PCF side according to an embodiment of the present application;
FIG. 14 is a second structural schematic diagram of an apparatus for using a PDUID on the proximity service function side according to an embodiment of the present application;
FIG. 15 is a second structural schematic diagram of an apparatus for using a PDUID on the UE side according to an embodiment of the present application.

### Detailed Description

Embodiments of the present application provide a method and apparatus for using a PDUID and a storage medium, so as to solve the technical problem in the prior art of how to assign a PDUID to a UE and how to use the PDUID under the 5G network architecture.

In order to solve the above-mentioned technical problem, the general idea of the technical solution in the embodiments of the present application is as follows.

Provided is a method for using a PDUID, performed by a PCF on the network side. The method includes: receiving a proximity service policy provision request message from a LTE; wherein the proximity service policy provision request message is used for requesting to provide the UE with a parameter required for proximity service discovery; and providing a proximity discovery parameter to the UE according to the proximity service policy provision request message; wherein the proximity discovery parameter includes a PDUID of the UE.

In the above solution, after receiving the proximity service policy provision request message sent by the UE, the PCF on the network side provides the UE with the parameter required for proximity service discovery according to the proximity service policy provision request message, and provides the UE with the proximity discovery parameter that includes the PDUID of the UE, so that the UE can use the PDUID under the 5G network architecture.

In order for better understanding of the above-mentioned technical solution, the technical solution of the present application will be illustrated below in details by way of the drawings and specific embodiments. It should be understood that the embodiments of the present application and the specific features in the embodiments are intended to illustrate the technical solution of the present application in details but not limit the technical solution of the present application. The embodiments of the present application and the specific features in the embodiments can be combined with each other without collision.

In order for those skilled in the art to fully understand the solution of the present application, the assignment and use of PDUID in the 4G ProSe standard are briefly introduced before the technical solution of the present application is introduced.

In the 4G ProSe, in order to support the restricted discovery process, the application server needs to authenticate a discovery request sent by the proximity service function. In order to avoid exposing the 3GPP network identifier (such as IMSI) of the UE to the discovery server, the proximity service function assigns a PDUID to the UE. In the service authorization process, the proximity service function provides the PDUID to the UE through the PC3 interface.

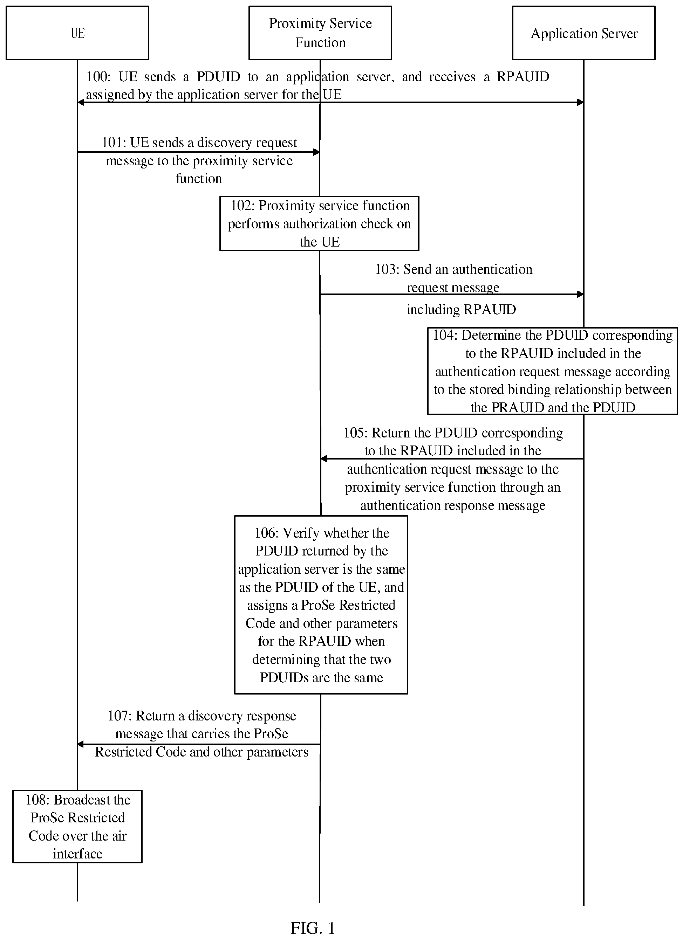

In the restricted discovery process, the UE provides the PDUID to the application server, and the application server uses the PDUID to authenticate the discovery request of the proximity service function. The specific process refers to FIG. 1, which is a flowchart of the restricted discovery process of the proximity service in the 4G.

Step 100: a UE sends a PDUID to an application server, and receives a RPAUID assigned by the application server for the UE.

The UE can provide the PDUID to the application server through the signaling layer. The application server assigns the RPAUID for the PDUID and saves the binding relationship between the PDUID and the RPAUID. After that, the application server returns the RPAUID to the UE.

Step 101: the UE sends a discovery request message to the proximity service function.

The discovery request message includes parameters such as RPAUID, Application ID, etc.

Step 102: the proximity service function performs authorization check on the UE.

This authorization check is used to determine whether the Application ID provided by the UE is allowed to be discovered firstly. If there is no UE context in the ProSe function, the proximity service function performs the authorization check through a Home Subscriber Server (HSS).

Step 103: the proximity service function sends an authentication request message to the application server.

The authentication request message includes the RPAUID.

Step 104: the application server determines the PDUID corresponding to the RPAUID included in the authentication request message according to the stored binding relationship between the PRAUID and the PDUID.

Step 105: the application server returns the PDUID corresponding to the RPAUID included in the authentication request message to the proximity service function through a authentication response message.

Step 106: the proximity service function verifies whether the PDUID returned by the application server is the same as the PDUID of the UE, and assigns a user identifier of a proximity discovery application layer (ProSe Restricted Code) and other parameters for the RPAUID when determining that the two PDUIDs are the same.

Step 107: the proximity service function returns a discovery response message to the UE, where the discovery response message carries the ProSe Restricted Code and other parameters.

Step 108: the UE broadcasts the ProSe Restricted Code over the air interface.

In this way, the UE can let other UEs discover it through the ProSe Restricted Code and perform proximity communication with it.

As can be seen from steps 100-108, in the 4G ProSe standard, the proximity service function (ProSe Function) not only provides the UE with a PDUID, but also participates in the discovery process to realize the authentication process between the proximity service function (ProSe Function) and the application server (ProSe App Server).

In the 5G ProSe standard, the PCF provides the UE with the discovery parameter, and the discovery process is participated by the proximity service function. That is, the parameter providing function and the discovery function are located in different network entities in the 5G ProSe, while the parameter providing function and the discovery function are located in the same network entity (i.e., ProSe Function) in the 4G ProSe, making it impossible to use the same method as that in the 4G ProSe for parameter provision and function discovery in the 5G ProSe.

Therefore, the present application provides the following method to solve the problem that the PDUID cannot be used under the 5G network architecture.

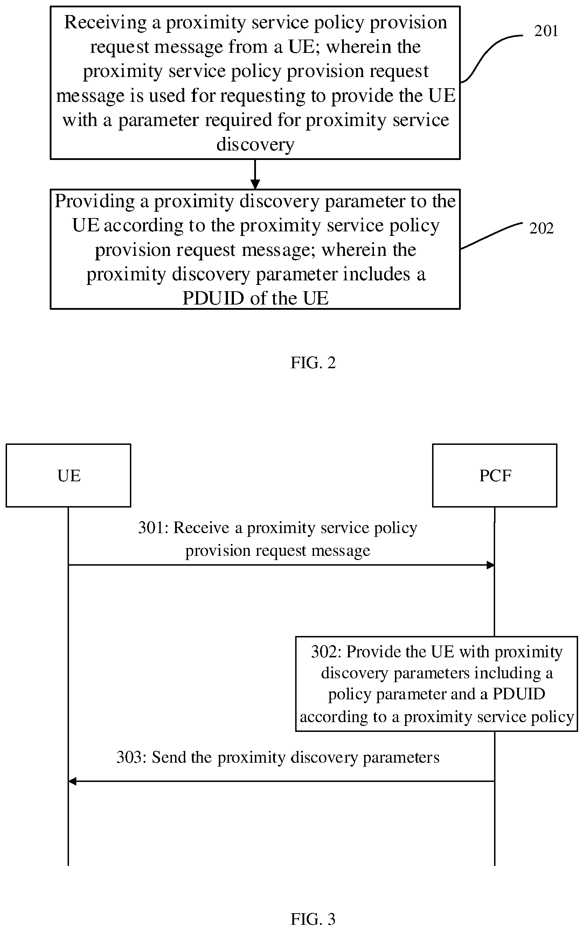

Referring to FIG. 2, embodiments of the present application provide a method for using a PDUID, which is performed by a PCF on the network side. The processing procedure of the method is as follows.

Step 201: receiving a proximity service policy provision request message from a UE. The proximity service policy provision request message is used for requesting to provide the UE with a parameter required for proximity service discovery.

The step of receiving the proximity service policy provision request message from the UE includes: receiving the proximity discovery capability information from the UE. The proximity discovery capability information is used to indicate that the UE supports proximity service discovery.

For example, when the UE sends a proximity service policy provision request message to the PCF, the proximity service policy provision request message may carry the proximity service capability information. The proximity service capability information indicates that the UE supports the restricted discovery.

In implementations, the proximity service policy provision request message may be forwarded to the PCF through an Access control and Mobility management Function (AMF). The AMF can determine whether the UE can perform the restricted discovery according to the capability information and subscription information of the UE, and forward the proximity service policy provision request message to the PCF when determining that the UE can perform the restricted discovery.

Step 202 may be executed after the PCF receives the proximity service policy provision request message.

Step 202: providing a proximity discovery parameter to the UE according to the proximity service policy provision request message. The proximity discovery parameter includes a PDUID of the UE.

After receiving the proximity service policy provision request message, there is a need to assign a policy parameter and a PDUID to the UE according to the proximity service policy provision request message, and provide them as proximity discovery parameters to the UE.

The PDUID may be assigned to the UE in two ways as follows.
1. The PCF assigns the PDUID to the UE and provides it to the UE.
2. The PCF obtains the PDUID from the proximity service function and provides it to the UE.

The PCF obtains the PDUID from the proximity service function. The PCF may obtain the PDUID in the following way: the PCF requests the proximity service function to assign the PDUID, and contains a UE identifier of the UE in the request message; and the PCF receives the PDUID assigned by the proximity service function to the UE.

The UE identifier may be UE ID, such as Subscription Permanent Identifier (SUPI).

In embodiments of the present application, the PDUID includes a Public Land Mobile Network Identifier (PLMN ID) and a temporary identifier of the UE.

In embodiments of the present application, after providing the PDUID to the UE, the method further includes:
the PCF receives an authentication request message from the proximity service function, where the authentication request message contains a UE identifier of the UE; and the PCF returns an authentication response message to the proximity service function, where the response message contains the PDUID of the UE.

During the restricted discovery process after the PCF provides the proximity discovery parameter to the UE, the PCF may also need to provide the proximity service function with the PDUID of the UE. For example, after the PCF receives the authentication request message containing the UE identifier sent by the proximity service function, the PCF finds out the corresponding PDUID according to the UE identifier, and sends the PDUID to the proximity service function through the authentication response message.

In order to enable those skilled in the art to fully understand the above technical solution, two examples will be provided below for description.

Referring to FIG. 3, it is a flowchart in which the PCF assigns a PDUID to a UE according to an embodiment of the present application.

Step 301: the PCF receives a proximity service policy provision request message.

The proximity service policy provision request message is used for requesting to provide the UE with a parameter required for proximity service discovery. The proximity service policy provision request message includes proximity discovery capability information for indicating that the UE supports the proximity service discovery.

Step 302: the PCF provides the UE with proximity discovery parameters including a policy parameter and a PDUID according to a proximity service policy.

Step 303: the PCF sends the proximity discovery parameters to the UE.

After the steps 301 to 303 are performed, in the subsequent discovery process and in the process in which the UE requests the proximity service function to assign a proximity discovery identification code, since the PDUID is assigned by the PCF to the UE, the PDUID corresponding to the UE identifier is not stored in the proximity service function, and thus the proximity service function needs to send an authentication request message containing the UE identifier to the PCF, so that the PCF returns the PDUID corresponding to the UE identifier to the proximity service function through an authentication response message.

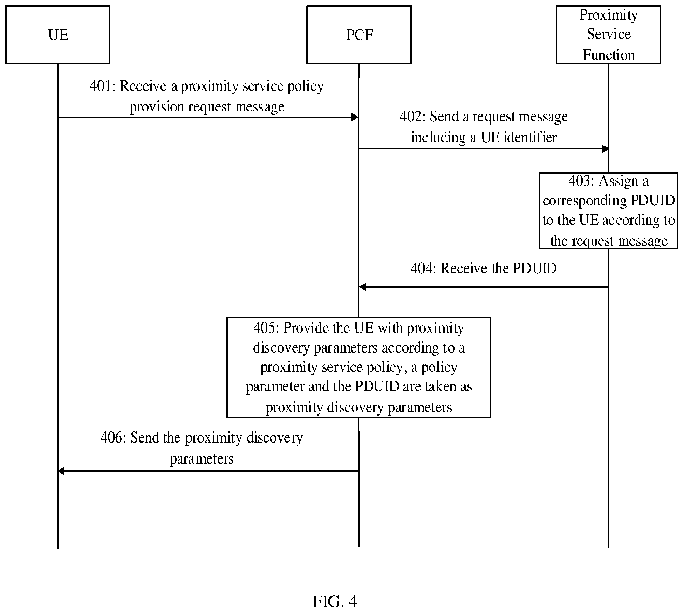

Referring to FIG. 4, it is a flowchart in which the proximity service function assigns a PDUID according to an embodiment of the present application.

Step 401: the PCF receives a proximity service policy provision request message.

The proximity service policy provision request message is used for requesting to provide the UE with a parameter required for proximity service discovery. The proximity service policy provision request message includes proximity discovery capability information for indicating that the UE supports the proximity service discovery.

Step 402: the PCF sends a request message including a UE identifier to the proximity service function.

The request message is used to request the proximity service function to assign a PDUID to the UE corresponding to the UE identifier.

Step 403: the proximity service function assigns a corresponding PDUID to the UE according to the request message.

Further, the correspondence between the UE identifier and the PDUID is stored.

Step 404: the PCF receives the PDUID.

Step 405: the PCF provides the UE with proximity discovery parameters according to a proximity service policy, and the policy parameter and the PDUID are taken as proximity discovery parameters.

Step 406: the PCF sends the proximity discovery parameters to the UE.

Since the PDUID is stored in the proximity service function, the PDUID corresponding to the UE identifier can be directly searched for in the proximity service function without requesting the PCF, when the proximity service function assigns the proximity discovery identification code to the UE in the subsequent discovery process.

After the method for using the PDUID is introduced from the PCF side, how to use the PDUID assigned by the PCF to the UE will be introduced below from the side of the proximity service function.

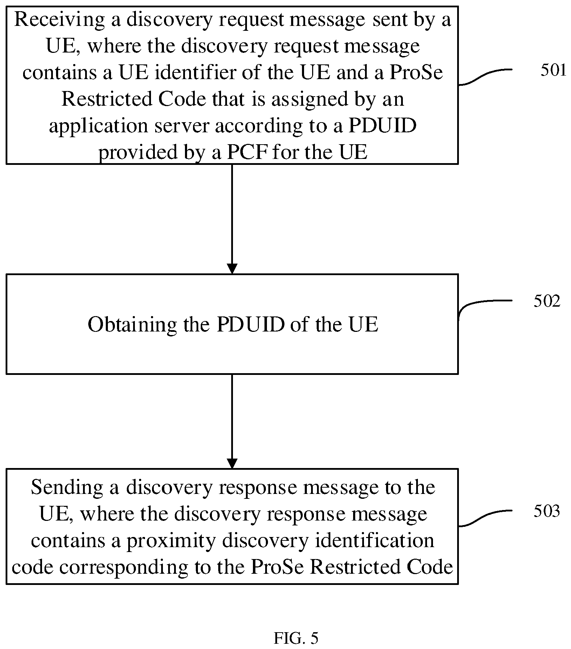

Referring to FIG. 5, embodiments of the present application provide a method for using a PDUID, which is performed by a proximity service function on the network side, and the method includes the following steps.

Step 501: receiving a discovery request message sent by a UE. The discovery request message contains a UE identifier and a ProSe Restricted Code of the UE. The ProSe Restricted Code is assigned by an application server according to a PDUID provided by a PCF for the UE.

After the UE receives the PDUID provided by the PCF, the UE provides the PDUID of the UE to the application server through application layer signaling, so that the application server assigns the ProSe Restricted Code to the UE. After obtaining the ProSe Restricted Code, the UE sends a discovery request message carrying the UE identifier and the ProSe Restricted Code to the proximity service function.

Step 502 may be executed after the proximity service function receives the discovery request message sent by the UE.

Step 502: obtaining the PDUID of the UE.

In embodiments of the present application, the PDUID of the UE may be obtained in the following ways:
if the PDUID is assigned by the proximity service function to the UE, obtaining the PDUID in the proximity service function according to the UE identifier;
if the PDUID is assigned by the PCF to the UE:
   obtaining the PDUID from the discovery request message when the discovery request message includes the PDUID; or
   obtaining the PDUID from the PCF according to the UE identifier when the discovery request message does not include the PDUID.

The step in which the proximity service function obtains the PDUID from the PCF according to the UE identifier may be implemented in the following way:
sending an authentication request message to the PCF, where the authentication request message contains the LTE identifier; and receiving an authentication response message returned by the PCF, where the response message contains the PDUID.

Step 503 may be executed after the PDUID of the UE is obtained.

Step 503: sending a discovery response message to the UE. The discovery response message contains a proximity discovery identification code corresponding to the ProSe Restricted Code.

In order to enable those skilled in the art to fully understand the above solution, several examples will be provided below for description.

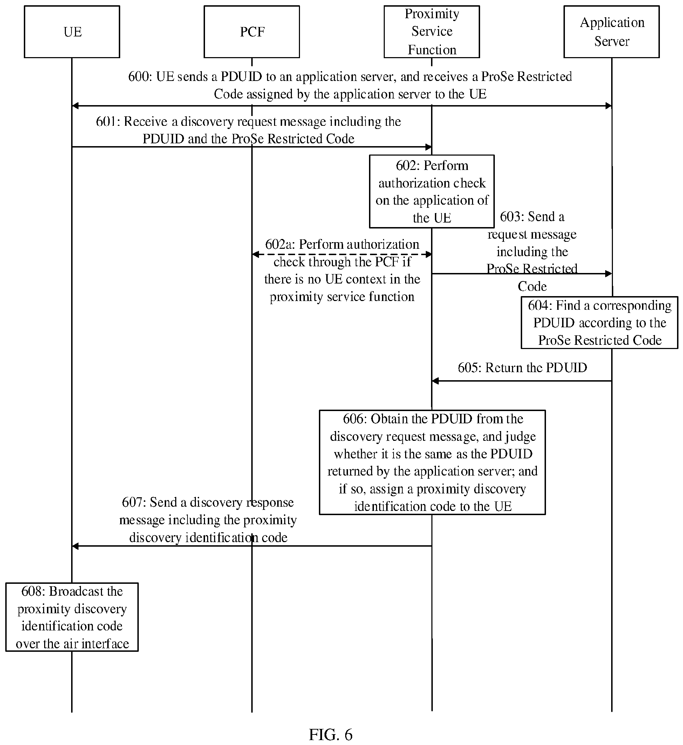

Referring to FIG. 6, it is a first flowchart of the proximity service discovery process according to an embodiment of the present application. It is assumed that the UE provides a PDUID to the proximity service function, and the PDUID of the UE is assigned in the manner in FIG. 3.

Step 600: The UE sends a PDUID to an application server, and receives a ProSe Restricted Code assigned by the application server to the UE.

The PDUID is assigned by the PCF, and the assignment process is shown in FIG. 3.

Step 601: The proximity service function receives a discovery request message including the PDUID and the ProSe Restricted Code.

The discovery request message is used for the proximity service function to assign a proximity discovery identification code to the UE.

Step 602: Perform authorization check on the application of the UE.

After receiving the discovery request message, the proximity service function needs to check whether the application of the UE is run for restricted discovery (i.e., authorization check). If there is a UE context in the proximity service function, the authorization check is performed in the proximity service function. If there is no UE context in the proximity service function, step 602a is performed.

Step 602a: Perform authorization check through the PCF if there is no UE context in the proximity service function.

After the authorization check passes, step 603 may be executed.

Step 603: The proximity service function sends a request message including the ProSe Restricted Code to the application server.

Step 604: The application server finds a corresponding PDUID according to the ProSe Restricted Code.

Step 605: The application server returns the PDUID.

Step 606: The proximity service function obtains the PDUID from the discovery request message, and judges whether it is the same as the PDUID returned by the application server; and if so, assigns a proximity discovery identification code to the UE.

Step 607: The proximity service function sends a discovery response message including the proximity discovery identification code to the UE.

Step 608: The UE broadcasts the proximity discovery identification code over the air interface.

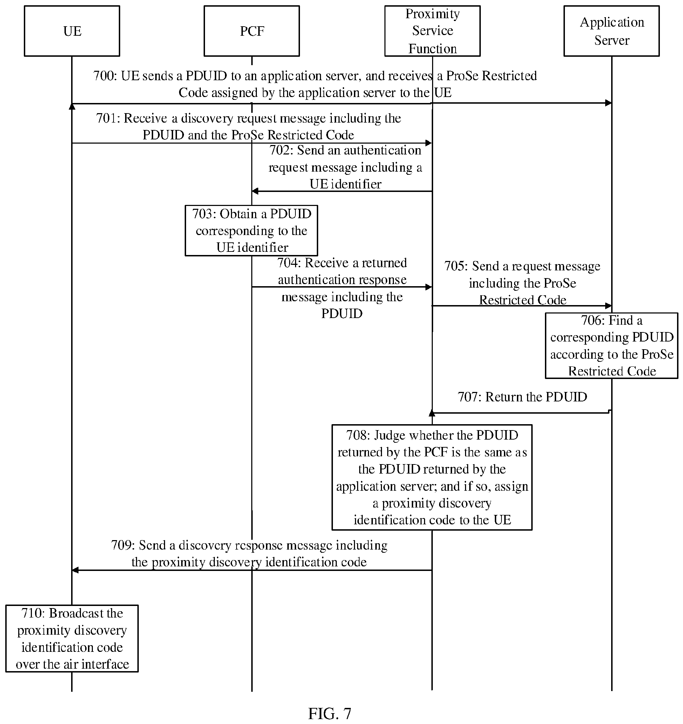

Referring to FIG. 7, it is a second flowchart of the proximity service discovery process according to an embodiment of the present application. It is assumed that the UE provides no PDUID to the proximity service function, and the PDUID of the UE is assigned in the manner in FIG. 3.

Step 700: The UE sends a PDUID to an application server, and receives a ProSe Restricted Code assigned by the application server to the UE.

The PDUID is assigned by the PCF, and the assignment process is shown in FIG. 3.

Step 701: The proximity service function receives a discovery request message including the PDUID and the ProSe Restricted Code.

The discovery request message is used for the proximity service function to assign a proximity discovery identification code to the UE.

Step 702: The proximity service function sends an authentication request message including a UE identifier.

Step 703: The PCF obtains a PDUID corresponding to the UE identifier.

Since the PDUID is assigned by the PCF for the UE, the PCF can obtain the corresponding PDUID according to the UE identifier provided by the proximity service function.

Step 704: The proximity service function receives an authentication response message including the PDUID returned from the PCF.

Step 705: The proximity service function sends a request message including the ProSe Restricted Code to the application server.

Step 706: The application server finds a corresponding PDUID according to the ProSe Restricted Code.

Step 707: The application server returns the found PDUID.

Step 708: The proximity service function judges whether the PDUID returned by the PCF is the same as the PDUID returned by the application server; and if so, assigns a proximity discovery identification code to the UE.

Step 709: The proximity service function sends a discovery response message including the proximity discovery identification code to the UE.

Step 710: The UE broadcasts the proximity discovery identification code over the air interface.

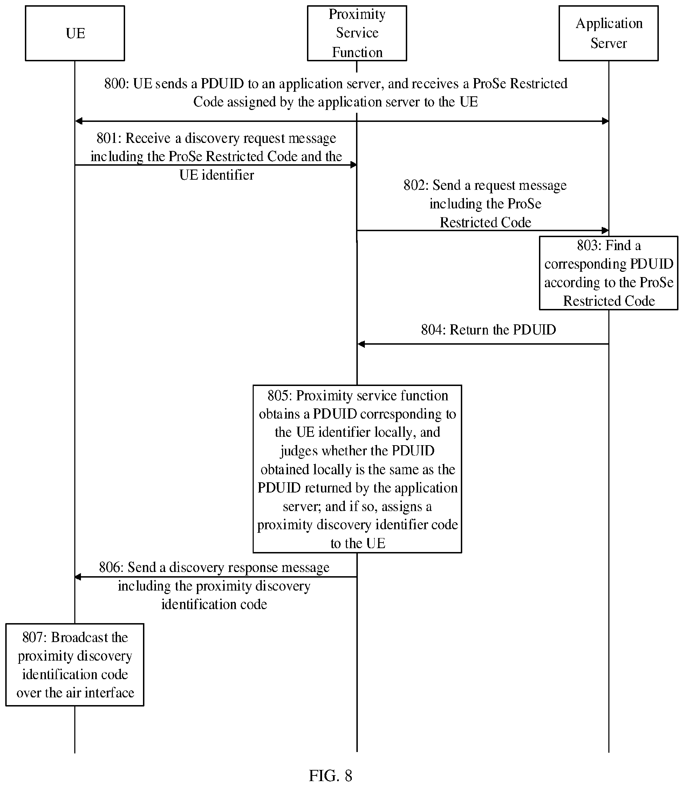

Referring to FIG. 8, it is a third flowchart of the proximity service discovery process according to an embodiment of the present application. It is assumed that the UE provides no PDUID to the proximity service function, and the PDUID of the UE is assigned in the manner in FIG. 4.

Step 800: The UE sends a PDUID to an application server, and receives a ProSe Restricted Code assigned by the application server to the UE.

The PDUID is assigned by the proximity service function, and the assignment process is shown in FIG. 4.

Step 801: The proximity service function receives a discovery request message including the PDUID and the ProSe Restricted Code.

The discovery request message is used for the proximity service function to assign a proximity discovery identification code to the UE.

Step 802: The proximity service function sends a request message including the ProSe Restricted Code to the application server.

Step 803: The application server finds a corresponding PDUID according to the ProSe Restricted Code.

Step 804: The application server returns the PDUID.

Step 805: The proximity service function obtains a PDUID corresponding to the UE identifier locally, and judges whether the PDUID obtained locally is the same as the PDUID returned by the application server; and if so, assigns a proximity discovery identification code to the UE.

Since the PDUID of the UE is assigned by the proximity service function, the proximity service function may obtain the PDUID corresponding to the UE identifier locally.

Step 806: The proximity service function sends a discovery response message including the proximity discovery identification code to the UE.

Step 807: The UE broadcasts the proximity discovery identification code over the air interface.

After the process of using the PDUID is introduced from the PCF side and the proximity service application side, the process of using the PDUID will be introduced below from the UE side.

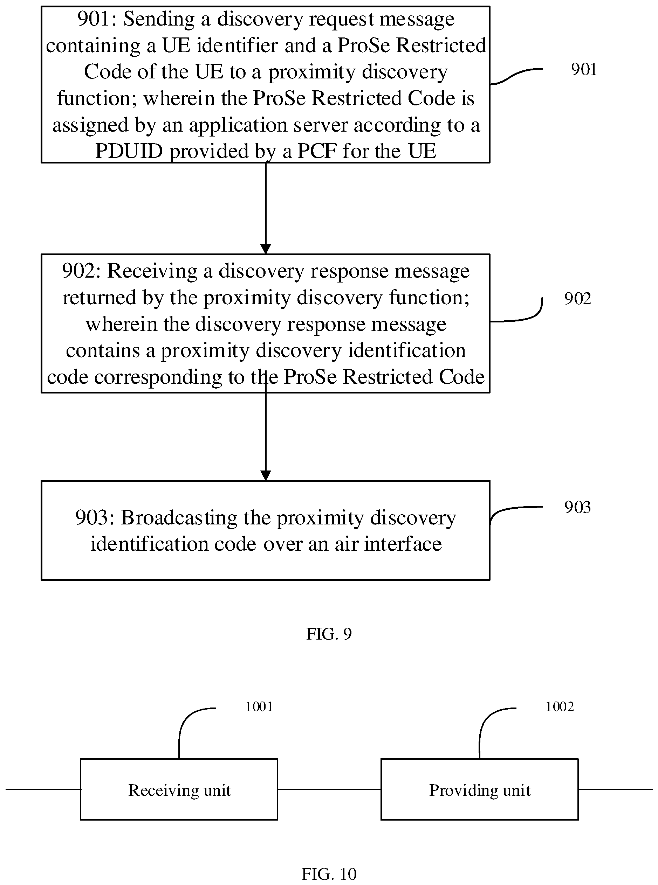

Referring to FIG. 9, a method for using a PDUID according to an embodiment of the present application is performed by a UE, and the implementation process of the method is as follows.

Step 901: sending a discovery request message containing a UE identifier and a ProSe Restricted Code of the UE to a proximity service function. The ProSe Restricted Code is assigned by an application server according to a PDUID provided by a PCF for the UE.

In some embodiments of the present application, the discovery request message further includes the PDUID.

Before the UE sends the discovery request to the proximity service function, the method further includes: providing the PDUID to the application server; and receiving the ProSe Restricted Code assigned by the application server to the UE.

Before providing the PDUID to the application server, the method further includes:
sending a proximity service policy provision request message to the PCF; wherein the proximity service policy provision request message is used for requesting to provide the UE with a parameter required for proximity service discovery;
receiving a proximity discovery parameter provided by the PCF for the UE; wherein the proximity discovery parameter includes the PDUID.

In some embodiments of the present application, the PDUID includes a PLMN ID and a temporary identifier of the UE.

Step 902: receiving a discovery response message returned by the proximity service function. The discovery response message contains a proximity discovery identification code corresponding to the ProSe Restricted Code.

Step 903: broadcasting the proximity discovery identification code over an air interface.

For the embodiments on the UE side, reference may be made to the implementation processes of the UE in Figs. 3-4 and Figs. 6-8, which will not be repeated here.

Based on the same inventive concept, embodiments of the present application provide an apparatus for using a PDUID, which is applied to the PCF on the network side. For the embodiments of the method for using this apparatus, reference may made to the description of the method embodiments on the PCF side, and the repetition will be omitted here. Referring to FIG. 10, the use apparatus includes:
a receiving unit 1001, configured to receive a proximity service policy provision request message from a LTE; wherein the proximity service policy provision request message is used for requesting to provide the UE with a parameter required for proximity service discovery;
a providing unit 1002, configured to provide a proximity discovery parameter to the UE according to the proximity service policy provision request message; wherein the proximity discovery parameter includes a PDUID of the UE.

Optionally, the receiving unit 1001 is further configured to:
receive proximity discovery capability information from the LTE; wherein the proximity discovery capability information is used to indicate that the UE supports proximity service discovery.

Optionally, the providing unit 1002 is configured to:
assign the PDUID for the UE, and provide the PDUID to the UE;
or, obtain the PDUID from a proximity service function, and provide the PDUID to the UE.

Optionally, the providing unit 1002 is further configured to:
request the proximity service function to assign the PDUID, and contain a UE identifier of the UE in a request message;
receive the PDUID assigned by the proximity service function to the UE.

Optionally, the providing unit 1002 is further configured to:
receive an authentication request message from the proximity service function, wherein the authentication request message contains a UE identifier of the UE;
return an authentication response message to the proximity service function, wherein the response message contains the PDUID of the UE.

Optionally, the PDUID includes a Public Land Mobile Network Identifier (PLMN ID) and a temporary identifier of the UE.

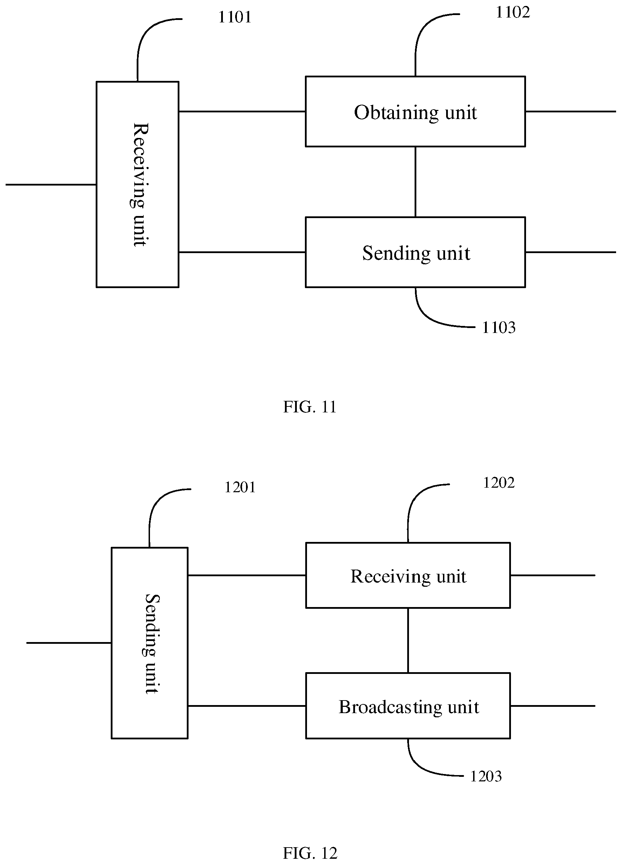

Based on the same inventive concept, embodiments of the present application provide an apparatus for using a PDUID, which is applied to the proximity service function on the network side. For the embodiments of the method for using this apparatus, reference may made to the description of the method embodiments on the proximity service function side, and the repetition will be omitted here. Referring to FIG. 11, the use apparatus includes:
a receiving unit 1101, configured to receive a discovery request message sent by a UE, wherein the discovery request message contains a UE identifier of the UE and a ProSe Restricted Code that is assigned by an application server according to a PDUID provided by a PCF for the UE;
an obtaining unit 1102, configured to obtain the PDUID of the UE;
a sending unit 1103, configured to send a discovery response message to the UE, wherein the discovery response message contains a proximity discovery identification code corresponding to the ProSe Restricted Code.

Optionally, the obtaining unit 1102 is configured to:
if the PDUID is assigned by the proximity service function to the UE, obtain the PDUID in the proximity service function according to the UE identifier;
if the PDUID is assigned by the PCF to the UE:
   obtain the PDUID from the discovery request message when the discovery request message includes the PDUID; or
   obtain the PDUID from the PCF according to the UE identifier when the discovery request message does not include the PDUID.

Optionally, the obtaining unit 1102 is further configured to:
send an authentication request message to the PCF, wherein the authentication request message contains the UE identifier;
receive an authentication response message returned by the PCF, wherein the response message contains the PDUID.

Based on the same inventive concept, embodiments of the present application provide an apparatus for using a PDUID, which is applied to the UE. For the embodiments of the method for using this apparatus, reference may made to the description of the method embodiments on the UE side, and the repetition will be omitted here. Referring to FIG. 12, the use apparatus includes:
a sending unit 1201, configured to send a discovery request message containing a UE identifier of the UE and a ProSe Restricted Code to a proximity service function; wherein the ProSe Restricted Code is assigned by an application server according to a PDUID provided by a PCF for the UE;
a receiving unit 1202, configured to receive a discovery response message returned by the proximity service function; wherein the discovery response message contains a proximity discovery identification code corresponding to the ProSe Restricted Code;
a broadcasting unit 1203, configured to broadcast the proximity discovery identification code over an air interface.

Optionally, the sending unit 1201 is further configured to:
provide the PDUID to the application server;
receive the ProSe Restricted Code assigned by the application server to the UE.

Optionally, the sending unit 1201 is further configured to:
send a proximity service policy provision request message to the PCF; wherein the proximity service policy provision request message is used for requesting to provide the UE with a parameter required for proximity service discovery;
receive a proximity discovery parameter provided by the PCF for the UE; wherein the proximity discovery parameter includes the PDUID.

Optionally, the PDUID includes a Public Land Mobile Network Identifier (PLMN ID) and a temporary identifier of the UE.

Optionally, the discovery request message further includes the PDUID.

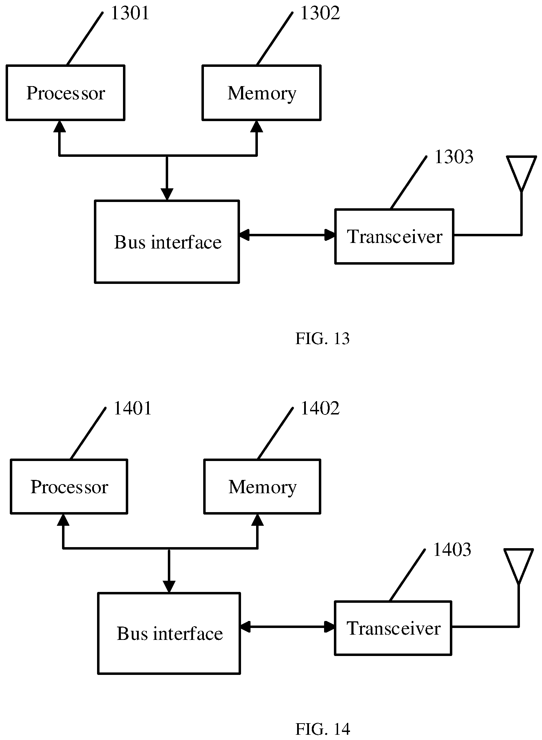

As shown in FIG. 13, an apparatus for using a PDUID according to embodiments of the present application is applied to a PCF on the network side, and the apparatus includes: a processor 1301, a memory 1302 and a transceiver 1303;
wherein the processor 1301 is configured to read a program in the memory 1302 and perform the process of:
receiving a proximity service policy provision request message from a UE; wherein the proximity service policy provision request message is used for requesting to provide the UE with a parameter required for proximity service discovery;
providing a proximity discovery parameter to the UE according to the proximity service policy provision request message; wherein the proximity discovery parameter includes a PDUID of the UE.

Optionally, the processor 1301 is further configured to:
receive proximity discovery capability information from the LTE; wherein the proximity discovery capability information is used to indicate that the UE supports proximity service discovery.

Optionally, the processor 1301 is configured to:
assign the PDUID for the UE, and provide the PDUID to the UE;
or, obtain the PDUID from a proximity service function, and provide the PDUID to the UE.

Optionally, the processor 1301 is further configured to:
request the proximity service function to assign the PDUID through a request message, wherein the request message contains a UE identifier of the UE;
receive the PDUID assigned by the proximity service function to the UE.

Optionally, the processor 1301 is further configured to:
receive an authentication request message from the proximity service function, wherein the authentication request message contains a UE identifier of the UE;
return an authentication response message to the proximity service function, wherein the response message contains the PDUID of the UE.

Optionally, the PDUID includes a Public Land Mobile Network Identifier (PLMN ID) and a temporary identifier of the UE.

The processor 1301 is responsible for managing the bus architecture and general processing, and the memory 1302 may store the data used by the processor 1301 when performing the operations. The transceiver 1303 is configured to receive and send the data under the control of the processor 1301.

The bus architecture may include any numbers of interconnected buses and bridges, and link various circuits of one or more processors represented by the processor 1301 and the memory represented by the memory 1302. The bus architecture may further link various other circuits such as peripheral device, voltage regulator and power management circuit, which are all well known in the art and thus will not be further described again herein. The bus interface provides an interface. The processor 1301 is responsible for managing the bus architecture and general processing, and the memory 1302 may store the data used by the processor 1301 when performing the operations.

The procedure disclosed by the embodiments of the present application may be applied in the processor 1301 or implemented by the processor 1301. In the implementation process, each step of the signal processing flow may be completed by the integrated logic circuit of hardware or the instruction in the form of software in the processor 1301. The processor 1301 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor 1301. The software modules may be located in the random access memory, flash memory, read only memory, programmable read only memory or electrically erasable programmable memory, register and other mature storage medium in the art. The storage medium is located in the memory 1302, and the processor 1301 reads the information in the memory 1302 and completes the steps of the signal processing flow in combination with its hardware.

As shown in FIG. 14, an apparatus for using a PDUID according to embodiments of the present application is applied to a proximity service function on the network side, and the apparatus includes: a processor 1401, a memory 1402 and a transceiver 1403;
wherein the processor 1401 is configured to read a program in the memory 1402 and perform the process of:
receiving a discovery request message sent by a UE, wherein the discovery request message contains a UE identifier and a ProSe Restricted Code of the UE, the ProSe Restricted Code is assigned by an application server according to a PDUID provided by a PCF for the UE;
obtaining the PDUID of the UE;
sending a discovery response message to the UE, wherein the discovery response message contains a proximity discovery identification code corresponding to the ProSe Restricted Code.

Optionally, the processor 1401 is configured to:
if the PDUID is assigned by the proximity service function to the UE, obtain the PDUID in the proximity service function according to the UE identifier;
if the PDUID is assigned by the PCF to the UE:
   obtain the PDUID from the discovery request message when the discovery request message includes the PDUID; or
   obtain the PDUID from the PCF according to the UE identifier when the discovery request message does not include the PDUID.

Optionally, the processor 1401 is further configured to:
send an authentication request message to the PCF, wherein the authentication request message contains the UE identifier;
receive an authentication response message returned by the PCF, wherein the response message contains the PDUID.

The processor 1401 is responsible for managing the bus architecture and general processing, and the memory 1402 may store the data used by the processor 1401 when performing the operations. The transceiver 1403 is configured to receive and send the data under the control of the processor 1401.

The bus architecture may include any numbers of interconnected buses and bridges, and specifically link various circuits of one or more processors represented by the processor 1401 and the memory represented by the memory 1402. The bus architecture may further link various other circuits such as peripheral device, voltage regulator and power management circuit, which are all well known in the art and thus will not be further described again herein. The bus interface provides an interface. The processor 1401 is responsible for managing the bus architecture and general processing, and the memory 1402 may store the data used by the processor 1401 when performing the operations.

The procedure disclosed by the embodiments of the present application may be applied in the processor 1401 or implemented by the processor 1401. In an implementation process, each step of the signal processing flow may be completed by the integrated logic circuit of hardware in the processor or the instruction in the form of software. The processor 1401 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor 1401. The software modules may be located in the random access memory, flash memory, read only memory, programmable read only memory or electrically erasable programmable memory, register and other mature storage medium in the art. The storage medium is located in the memory 1402, and the processor 1401 reads the information in the memory 1402 and completes the steps of the signal processing flow in combination with its hardware.

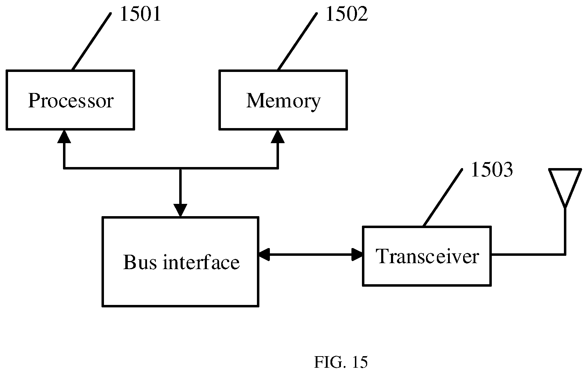

As shown in FIG. 15, an apparatus for using a PDUID according to embodiments of the present application is applied to a UE on the network side, and the apparatus includes: a processor 1501, a memory 1502 and a transceiver 1503;
wherein the processor 1501 is configured to read a program in the memory 1502 and perform the process of:
sending a discovery request message containing a UE identifier of the UE and a ProSe Restricted Code of the UE to a proximity service function; wherein the ProSe Restricted Code is assigned by an application server according to a PDUID provided by a PCF for the UE;
receiving a discovery response message returned by the proximity service function; wherein the discovery response message contains a proximity discovery identification code corresponding to the ProSe Restricted Code;
broadcasting the proximity discovery identification code over an air interface.

Optionally, the processor 1501 is further configured to:
provide the PDUID to the application server;
receive the ProSe Restricted Code assigned by the application server to the UE.

Optionally, the processor 1501 is further configured to:
send a proximity service policy provision request message to the PCF; wherein the proximity service policy provision request message is used for requesting to provide the UE with a parameter required for proximity service discovery;
receive a proximity discovery parameter provided by the PCF for the UE; wherein the proximity discovery parameter includes the PDUID.

Optionally, the PDUID includes a Public Land Mobile Network Identifier (PLMN ID) and a temporary identifier of the UE.

Optionally, the discovery request message further includes the PDUID.

The processor 1501 is responsible for managing the bus architecture and general processing, and the memory 1502 may store the data used by the processor 1501 when performing the operations. The transceiver 1503 is configured to receive and send the data under the control of the processor 1501.

The bus architecture may include any numbers of interconnected buses and bridges, and specifically link various circuits of one or more processors represented by the processor 1501 and the memory represented by the memory 1502. The bus architecture may further link various other circuits such as peripheral device, voltage regulator and power management circuit, which are all well known in the art and thus will not be further described again herein. The bus interface provides an interface. The processor 1501 is responsible for managing the bus architecture and general processing, and the memory 1502 may store the data used by the processor 1501 when performing the operations.

The procedure disclosed by the embodiments of the present application may be applied in the processor 1501 or implemented by the processor 1501. In an implementation process, each step of the signal processing flow may be completed by the integrated logic circuit of hardware in the processor or the instruction in the form of software. The processor 1501 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor 1501. The software modules may be located in the random access memory, flash memory, read only memory, programmable read only memory or electrically erasable programmable memory, register and other mature storage medium in the art. The storage medium is located in the memory 1502, and the processor 1501 reads the information in the memory 1502 and completes the steps of the signal processing flow in combination with its hardware.

Based on the same inventive concept, embodiments of the present application further provide a readable storage medium, including:
a memory configured to store instructions that, when executed by a processor, cause an apparatus including the readable storage medium to complete the method for using the PDUID on the PCF side or the proximity service function side or the UE side as described above.

It should be understood by those skilled in the art that the embodiments of the present application can provide methods, systems and computer program products. Thus the embodiments of the present application can take the form of hardware embodiments alone, software embodiments alone, or embodiments combining the software and hardware aspects. Also the embodiments of the present application can take the form of computer program products implemented on one or more computer usable storage mediums (including but not limited to magnetic disk memories, CD-ROMs, optical memories and the like) containing computer usable program codes therein.

The embodiments of the present application are described by reference to the flow charts and/or the block diagrams of the methods, the devices (systems) and the computer program products according to the embodiments of the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the present application without departing from the spirit and scope of the present application. Thus the present application is also intended to encompass these modifications and variations therein as long as these modifications and variations to the present application come into the scope of the claims of the present application and their equivalents.

## Claims

1. A method for using a proximity service discovery user equipment identifier, PDUID, performed by a Policy Control Function, PCF, on a network side, comprising:
receiving a proximity service policy provision request message from a User Equipment, UE; wherein the proximity service policy provision request message is used for requesting to provide the UE with a parameter required for proximity service discovery;
providing a proximity discovery parameter to the UE according to the proximity service policy provision request message; wherein the proximity discovery parameter comprises a PDUID of the UE.

2. The method of claim 1, wherein said receiving the proximity service policy provision request message from the UE, comprises:
receiving proximity discovery capability information from the LTE; wherein the proximity discovery capability information is used to indicate that the UE supports the proximity service discovery.

3. The method of claim 1, wherein said providing the proximity discovery parameter to the UE, comprises:
assigning the PDUID for the UE, and providing the PDUID to the LTE; or
obtaining the PDUID from a proximity service function, and providing the PDUID to the UE.

4. The method of claim 3, wherein said obtaining the PDUID from the proximity service function, comprises:
requesting, through a request message, the proximity service function to assign the PDUID; wherein the request message comprises a UE identifier of the UE;
receiving the PDUID assigned by the proximity service function to the UE.

5. The method of claim 1, wherein after providing the proximity discovery parameter to the UE, the method further comprises:
receiving an authentication request message from a proximity service function, wherein the authentication request message comprises a UE identifier of the UE;
returning an authentication response message to the proximity service function, wherein the response message comprises the PDUID of the UE.

6. The method of claim 1, wherein the PDUID comprises a Public Land Mobile Network Identifier, PLMN ID, and a temporary identifier of the UE.

7. A method for using a proximity service discovery user equipment identifier, PDUID, performed by a proximity service function on a network side, comprising:
receiving a discovery request message sent by a User Equipment, UE; wherein the discovery request message comprises a UE identifier and a user identifier of a proximity discovery application layer, ProSe Restricted Code, of the UE; and the ProSe Restricted Code is assigned by an application server according to a PDUID provided by a Policy Control Function, PCF, for the UE;
obtaining the PDUID of the UE;
sending a discovery response message to the UE, wherein the discovery response message comprises a proximity discovery identification code corresponding to the ProSe Restricted Code.

8. The method of claim 7, wherein said obtaining the PDUID of the UE, comprises:
if the PDUID is assigned by the proximity service function to the UE, obtaining the PDUID in the proximity service function according to the UE identifier,;
if the PDUID is assigned by the PCF to the UE:
obtaining the PDUID from the discovery request message when the discovery request message comprises the PDUID; or
obtaining the PDUID from the PCF according to the UE identifier when the discovery request message does not comprise the PDUID,.

9. The method of claim 8, wherein said obtaining the PDUID from the PCF according to the UE identifier, comprises:
sending an authentication request message to the PCF, wherein the authentication request message comprises the UE identifier;
receiving an authentication response message returned by the PCF, wherein the response message comprises the PDUID.

10. A method for using a proximity service discovery user equipment identifier, PDUID, performed by a User Equipment, UE, comprising:
sending a discovery request message to a proximity service function; wherein the discovery request message comprises a UE identifier and a user identifier of a proximity discovery application layer, ProSe Restricted Code of the UE, and the ProSe Restricted Code is assigned by an application server according to a PDUID provided by a Policy Control Function, PCF, for the UE;
receiving a discovery response message returned by the proximity service function; wherein the discovery response message comprises a proximity discovery identification code corresponding to the ProSe Restricted Code;
broadcasting the proximity discovery identification code over an air interface.

11. The method of claim 10, wherein before sending the discovery request message to the proximity service function, the method further comprises:
providing the PDUID to the application server;
receiving the ProSe Restricted Code assigned by the application server to the UE.

12. The method of claim 11, wherein before providing the PDUID to the application server, the method further comprises:
sending a proximity service policy provision request message to the PCF; wherein the proximity service policy provision request message is used for requesting to provide the UE with a parameter required for proximity service discovery;
receiving a proximity discovery parameter provided by the PCF for the UE; wherein the proximity discovery parameter comprises the PDUID.

13. The method of claim 12, wherein said the PDUID comprises a Public Land Mobile Network Identifier, PLMN ID, and a temporary identifier of the UE.

14. The method of claim 10, wherein the discovery request message further comprises the PDUID.

15. An apparatus for using a proximity service discovery user equipment identifier, PDUID, applied to a Policy Control Function, PCF, on a network side, comprising:
a receiving unit, configured to receive a proximity service policy provision request message from a User Equipment, UE; wherein the proximity service policy provision request message is used for requesting to provide the UE with a parameter required for proximity service discovery;
a providing unit, configured to provide a proximity discovery parameter to the UE according to the proximity service policy provision request message; wherein the proximity discovery parameter comprises a PDUID of the UE.

16. An apparatus for using a proximity service discovery user equipment identifier, PDUID, applied to a proximity service function on a network side, comprising:
a receiving unit, configured to receive a discovery request message sent by a User Equipment, UE, wherein the discovery request message comprises a UE identifier and a user identifier of a proximity discovery application layer, ProSe Restricted Code, of the UE, and the ProSe Restricted Code is assigned by an application server according to a PDUID provided by a Policy Control Function, PCF, for the UE;
an obtaining unit, configured to obtain the PDUID of the UE;
a sending unit, configured to send a discovery response message to the UE, wherein the discovery response message comprises a proximity discovery identification code corresponding to the ProSe Restricted Code.

17. An apparatus for using a proximity service discovery user equipment identifier, PDUID, applied to a User Equipment, UE, comprising:
a sending unit, configured to send a discovery request message to a proximity service function; wherein the discovery request message comprises a UE identifier and a user identifier of a proximity discovery application layer, ProSe Restricted Code, of the UE; and the ProSe Restricted Code is assigned by an application server according to a PDUID provided by a Policy Control Function, PCF, for the UE;
a receiving unit, configured to receive a discovery response message returned by the proximity service function; wherein the discovery response message comprises a proximity discovery identification code corresponding to the ProSe Restricted Code;
a broadcasting unit, configured to broadcast the proximity discovery identification code over an air interface.

18. An apparatus for using a proximity service discovery user equipment identifier, PDUID, applied to a Policy Control Function, PCF, on a network side, comprising: a processor, a memory and a transceiver;
wherein the processor is configured to read a program in the memory and perform a process of:
receiving a proximity service policy provision request message from a User Equipment, UE; wherein the proximity service policy provision request message is used for requesting to provide the UE with a parameter required for proximity service discovery;
providing a proximity discovery parameter to the UE according to the proximity service policy provision request message; wherein the proximity discovery parameter comprises a PDUID of the UE.

19. The apparatus of claim 18, wherein the processor is further configured to:
receive proximity discovery capability information from the UE; wherein the proximity discovery capability information is used to indicate that the UE supports the proximity service discovery.

20. The apparatus of claim 18, wherein the processor is configured to:
assign the PDUID for the UE, and provide the PDUID to the LTE; or
obtain the PDUID from a proximity service function, and provide the PDUID to the UE.

21. The apparatus of claim 20, wherein the processor is further configured to:
request, through a request message, the proximity service function to assign the PDUID, wherein the request message comprises a UE identifier of the UE;
receive the PDUID assigned by the proximity service function to the UE.

22. The apparatus of claim 18, wherein the processor is further configured to:
receive an authentication request message from the proximity service function, wherein the authentication request message comprises a UE identifier of the UE;
return an authentication response message to the proximity service function, wherein the response message comprises the PDUID of the UE.

23. The apparatus of claim 18, wherein the PDUID comprises a Public Land Mobile Network Identifier, PLMN ID, and a temporary identifier of the UE.

24. An apparatus for using a proximity service discovery user equipment identifier, PDUID, applied to a proximity service function on a network side, comprising a processor, a memory and a transceiver;
wherein the processor is configured to read a program in the memory and perform a process of:
receiving a discovery request message sent by a User Equipment, UE, wherein the discovery request message comprises a UE identifier and a user identifier of a proximity discovery application layer, ProSe Restricted Code, of the UE; wherein the ProSe Restricted Code is assigned by an application server according to a PDUID provided by a Policy Control Function, PCF, for the UE;
obtaining the PDUID of the UE;
sending a discovery response message to the UE, wherein the discovery response message comprises a proximity discovery identification code corresponding to the ProSe Restricted Code.

25. The apparatus of claim 24, wherein the processor is configured:
if the PDUID is assigned by the proximity service function to the UE, to obtain the PDUID in the proximity service function according to the UE identifier;
if the PDUID is assigned by the PCF to the UE:
to obtain the PDUID from the discovery request message when the discovery request message comprises the PDUID; or
to obtain the PDUID from the PCF according to the UE identifier when the discovery request message does not comprise the PDUID,.

26. The apparatus of claim 25, wherein the processor is further configured to:
send an authentication request message to the PCF, wherein the authentication request message comprises the UE identifier;
receive an authentication response message returned by the PCF, wherein the response message comprises the PDUID.

27. An apparatus for using a proximity service discovery user equipment identifier, PDUID, applied to a User Equipment, UE, on a network side, comprising: a processor, a memory and a transceiver;
wherein the processor is configured to read a program in the memory and perform a process of:
sending a discovery request message to a proximity service function; wherein the discovery request message comprises a UE identifier and a user identifier of a proximity discovery application layer, ProSe Restricted Code, of the UE; and the ProSe Restricted Code is assigned by an application server according to a PDUID provided by a Policy Control Function, PCF, for the UE;
receiving a discovery response message returned by the proximity service function; wherein the discovery response message comprises a proximity discovery identification code corresponding to the ProSe Restricted Code;
broadcasting the proximity discovery identification code over an air interface.

28. The apparatus of claim 27, wherein the processor is further configured to:
provide the PDUID to the application server;
receive the ProSe Restricted Code assigned by the application server to the UE.

29. The apparatus of claim 28, wherein the processor is further configured to:
send a proximity service policy provision request message to the PCF; wherein the proximity service policy provision request message is used for requesting to provide the UE with a parameter required for proximity service discovery;
receive a proximity discovery parameter provided by the PCF for the UE; wherein the proximity discovery parameter comprises the PDUID.

30. The apparatus of claim 27, wherein the discovery request message further comprises the PDUID.

31. A readable storage medium, comprising a memory,
wherein the memory is configured to store instructions that, when executed by a processor, cause an apparatus comprising the readable storage medium to complete the method according to any one of claims 1 to 14.
